# EUROPEAN PATENT APPLICATION

(11) **EP 2 541 412 A1**
(43) Date of publication of application: **02.01.2013**
(21) Application number: 10846492.6
(22) Date of filing: 23.02.2010
(51) Int. Cl.: G06F 11/00

(54) **UPDATE METHOD, UPDATE DEVICE, AND UPDATE PROGRAM**

(71) Applicant: Fujitsu Limited, Kawasaki-shi, Kanagawa 211-8588 (JP)
(72) Inventor: YAMAUCHI, Hiromasa, Kawasaki-shi Kanagawa 211-8588 (JP); YAMASHITA, Koichiro, Kawasaki-shi Kanagawa 211-8588 (JP)
(74) Representative: Fenlon, Christine Lesley
(86) International application number: PCT/JP2010/052794
(87) International publication number: WO 2011/104825

(57) **Abstract**

When a hypervisor (131) receives a notification about the presence of a new version of a file, the hypervisor (131) extends a reference area of a node (S403), creates an old node (N1) (S404), and notifies a downloader (135) of the start of download (S405). When receiving a check result (not in use) from the linker (134), the hypervisor (131) prohibits calling of a library (a.dll) (S410). The hypervisor (131) instructs the downloader (135) to delete the old a.dll (S411). When receiving a notification about the completion of deletion, the hypervisor (131) rewrites an identification bit of the old node (N1) from "0" to "1" (S414) and releases the prohibition on calling of the library (a.dll) (S415). In this way, the size and the cost of a system are reduced and an update without suspension is realized.

## Description

### TECHNICAL FIELD

The embodiments discussed herein are related to an update method, an update apparatus, and an update program that update a library.

### BACKGROUND ART

A mobile terminal requires that functions be suspended during the update of libraries. As a result, a user cannot use the functions during the update. However, a system installed in a mobile terminal, unlike a general purpose computer, is expected to keep running 24 hours a day, 365 days a year and thus the suspension of functions has been a problem.

One proposal in the technical field of a server is an update method without the suspension of functions. In addition to a main system, a standby system is provided and during the update in the main system, the standby system takes charge of processes (see, for example, Patent Document 1 below).

Another proposal is that multiple operating systems (OS) are installed instead of a standby system for the entire system, providing the update without the suspension of functions (see, for example, Patent Documents 2-4 below).

According to Patent Document 1, in a system with multiple OS's installed, a system that is not inspected or maintained at the present time complements functions of a system that is to be maintained. For instance, the entire system is divided into subsystems and an OS (local OS) is given to each subsystem. An OS (global OS) which possesses all functions of each OS is also prepared. When a local OS is updated, the global OS plays a role of the local OS instead so that the update is conducted without the halt of the system.

Patent Document 1: Japanese Laid-open Patent Publication No. 2002-342102
Patent Document 2: Japanese Laid-open Patent Publication No. 54-106146
Patent Document 3: Japanese Laid-open Patent Publication No. 2005-63050
Patent Document 4: Japanese Laid-open Patent Publication No. 2006-31312

### DISCLOSURE OF INVENTION

### PROBLEM TO BE SOLVED BY THE INVENTION

However, if a standby system is prepared in addition to a main system and deals with processes while the main system is updated, a problem for an embedded system is that the size and the cost increase.

If a global OS acts for a local OS so that an update process does not bring the system into a halt as discussed in Patent Document 1, a problem for an embedded system is that the size and the cost increase.

Without a standby system or a global OS (for example, when a single OS is used), the system has to be stopped when updated.

As discussed above, an embedded system like one in a mobile terminal is expected to run 24 hours a day, 365 days a year and thus it becomes a problem according to the conventional art introduced above to stop the system because a user cannot access services or functions during the update.

The claimed invention aims to solve the problems above, providing an update method, an update apparatus, an update program that reduce the size and the cost of a system and provide the updating of the system without any suspension.

### MEANS FOR SOLVING PROBLEM

In order to solve the above problems and achieve the objectives, an update method, an update apparatus, and an update program according to the embodiments download a new version of a file concerning a library in a set of libraries in an operating system and delete an old version of the file concerning the library, comprising: detecting presence of the new version of the file; creating, when the new version of the file is detected, a second node that specifies a second storage area that is a different area from a first storage area for the old version of the file that is specified by a first node; checking, when the new version of the file is downloaded to the second storage area specified by the second node created at the creating, whether the old version of the file is in use; and notifying, when it turns out that the old version of the file is not in use at the checking, an instruction of deletion of the first node and of the old version of the file.

### EFFECT OF THE INVENTION

According to the update method, the update apparatus, and the update program, the size and the cost of a system are reduced and an update without suspension is realized.

### BRIEF DESCRIPTION OF DRAWINGS

FIG. 1 is a block diagram depicting a hardware configuration of an update apparatus according to an embodiment;
FIG. 2 is a diagram explaining the control of a file system by a hypervisor;
FIG. 3 is a diagram explaining the relationship among a process table, a link table, and a status table;
FIG. 4 is a diagram (Part 1) depicting the sequence of an update mode;
FIG. 5 is a diagram (Part 2) depicting the sequence of the update mode;
FIG. 6 is a diagram (Part 3) depicting the sequence of the update mode;
FIG. 7 is a flowchart depicting a library update process;
FIG. 8 is a flowchart depicting a detailed process of the update process in FIG. 7.
FIG. 9 is a flowchart depicting the update of the status table by the hypervisor; and
FIG. 10 is a flowchart depicting a read-out process of a library by the hypervisor.

### BEST MODE(S) FOR CARRYING OUT THE INVENTION

With reference to drawings, embodiments of an update method, an update apparatus, and an update program according to the present invention will be explained in detail.

### (Hardware configuration of update apparatus)

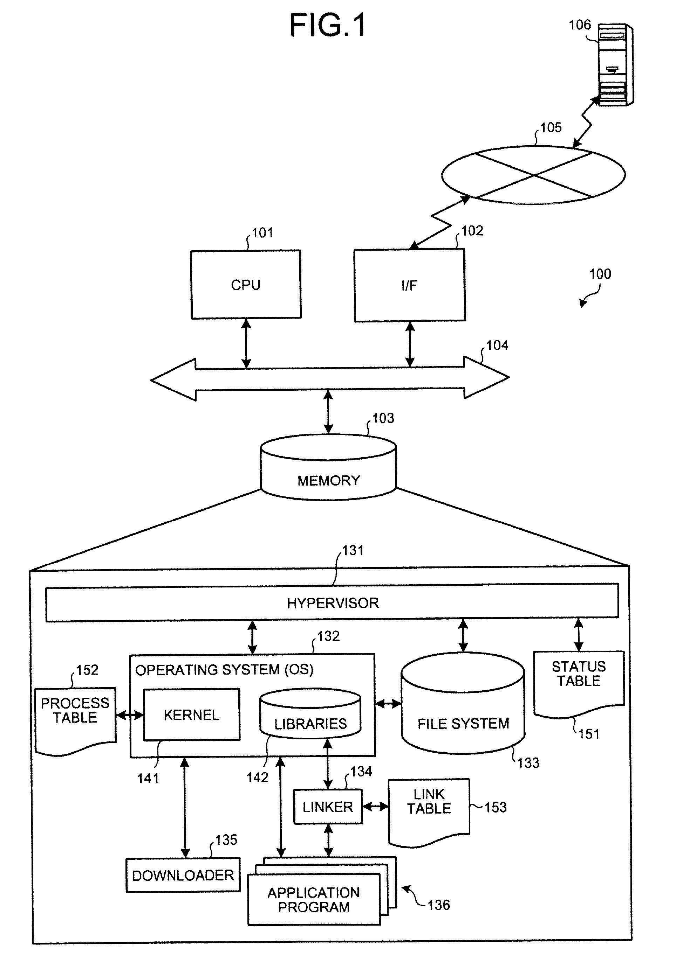

FIG. 1 is a block diagram depicting a hardware configuration of an update apparatus according to an embodiment. An update apparatus 100 includes a central processing unit (CPU) 101, an interface (I/F) 102, and a memory 103, respectively connected by a bus 104.

The CPU 101 is a processor that governs overall control of the update apparatus 100. The I/F 102 is connected through a communication line to a network 105 such as LAN (local area network), WAN (wide area network), and Internet, for example, wirelessly and is connected via the network 105 to a server 106, a source of the downloading. The I/F 102 governs the network 105 and the internal interface, controlling the input and output of data from an external device.

The memory 103 stores various data items and is used as a work area for the CPU 101. The memory 103 is a storage device such as a ROM (read only memory), a RAM (random access memory), a flash memory, or a hard disk drive.

The memory 103 stores a hypervisor 131, an OS 132, a file system 133, a linker 134, a downloader 135, and an application program 136. A program stored in the memory 103 is loaded to the CPU 101 and a programmed process is executed by the CPU 101.

The hypervisor 131 is a program that runs directly on the hardware, for example, the CPU 101. The hypervisor can execute privilege instructions such as directly referring to registers in the CPU 101, reading out information in the registers in the CPU 101, and rewriting information in the registers in the CPU 101. The hypervisor 131 also directly access the file system 133.

The hypervisor 131 works in an update mode as well as a normal mode in which the hypervisor 131 executes the above processes. In the update mode, the hypervisor 131 executes a special process so that libraries are updated without stopping the OS 132. When not in the update mode, the hypervisor 131 runs in a normal mode.

The hypervisor 131 at the update mode creates a status table 151 in the memory 103. The status table 151 may be created in a vacant register in the CPU 101. The status table 151 is a table that manages a status such as whether a library is being executed or not, and whether the download has been done or not.

The OS 132 is software that runs on the hypervisor 131. The OS 132 includes a kernel 141 and libraries 142. The kernel 141 executes processes such as a CPU management, a task management, and a file management. For example, as the task management, the kernel 141 registers in a process table 152, a process such as one or more currently running application programs 136.

In this way, it is monitored which application program 136 is being executed and which application program 136 has already been executed. For the file management, the OS 132 accesses the file system 133. This means that the OS 132 access files stored in the memory 103.

The libraries 142 are a set of libraries. A library is a program that includes versatile program elements and runs as part of other programs such as the application program 136 running on the OS 132. A library alone cannot be executed. For example, a dynamic link library is called and used from the memory 103 during the execution of the application program 136.

The file system 133 manages files in the memory 103. The file system 133 includes a node (also called node ID or i-node) that indicates a storage area of files in the memory 103. One node is a bit sequence with a given width and indicates the storage area with a value of the bit sequence.

The linker 134 is a program that links the application program 136 and the library used by the application program 136. The linker 134 registers a library called by a running application program 136 in a link table 153. In this way, it can be monitored which library the running application program 136 has called.

The application program 136 is a program that runs on the OS 132, and calls a library to execute a process. The downloader 135 is an application program 136 that detects a library that should be updated, downloads a new library from the server 106, and deletes an old library.

### (Control of file system 133 by the hypervisor 131)

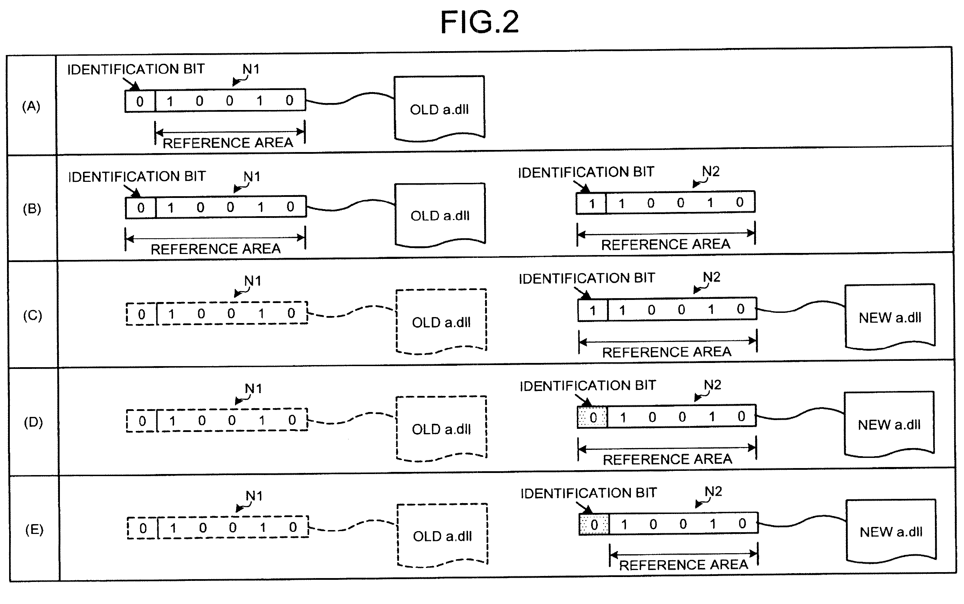

FIG. 2 is a diagram explaining the control of the file system 133 by the hypervisor 131. As an example, it is assumed that a library "a.dll" is to be updated. For convenience, an old version of the file a.dll stored in the memory 103 is called "old a.dll" and a new version that is obtained by downloading is called "new a.dll".

A node for the old a.dll is called an old node and a node for the new a.dll is called a new node. It is also assumed that a node has six bits and a node for the old a. dll is "010010". The hypervisor 131 is in a normal mode at phases (A) and (E) and in an update mode in phases (B) to (D).

Phase (A) depicts the relationship between an old node and a library in the normal mode before a new library is downloaded. The first bit of an old node N1 is an identification bit. The identification bit is a bit that is used to tell whether a library is being updated (in the update mode) or is not updated now (in the normal mode). The identification bit is set to "1" during the update and to "0" otherwise.

In the normal mode, the hypervisor 131 masks the identification bit and refers to the other bits. For example, in phase (A), the old a.dll is stored in a storage area indicated by "10010", a bit sequence from the second bit of the old node N1. Therefore, the remaining bit sequence points to the storage area for a library in the normal mode like phase (A).

Phase (B) depicts the transition from the normal mode to the update mode. When moving to the update mode, the hypervisor 131 extends a reference area of the old node N1 to the identification bit. For example, the reference area in the old node N1 is extended from "10010" to "010010".

The hypervisor 131 creates a new node N2. The hypervisor 131 copies "10010", the remaining bit sequence of the old node N1 for the old a.dll, and creates a new node N2 "110010" with the identification bit set to "1". A new a.dll is to be stored in the storage area indicated by the old node N1. As can be seen, the new node N2 differs from the old node N1 only in the identification bit.

Phase (C) depicts the download of a new a.dll and the deletion of the old a.dll and the old node N1 (illustrated with dotted line). The new a.dll is stored in a storage area indicated by the new node N2. Therefore, the old a.dll is not overwritten by the new a.dll. The downloader 135 deletes the old a.dll together with the old node N1.

Phase (D) depicts the completion of the update mode. Since the new a.dll has already been downloaded in phase (C), the hypervisor 131 rewrites the identification bit of the new node N2 from "1" to "0". The reference area is changed from all bits back to the bit sequence except the identification bit and the update mode is completed.

Phase (E) depicts the transition from the update mode to the normal mode. Since the identification bit is masked and the remaining bit sequence is referred to, the new a.dll is called by specifying the remaining bit sequence "10010" in this phase like phase (A). When an update file is presented for this new a.dll, the new a.dll is handled as the old a.dll, and processes of phase (B) and the subsequent phases are conducted.

As can be seen, once the mode goes back to the normal mode, the storage area of the new a.dll is specified by the same remaining bit sequence "10010" as the old a.dll. In the normal mode, the application program 136 that calls a.dll does not distinguish between an old file and a new file, and can call a.dll by specifying the same node "10010" before and after the update.

In the example above, the identification bit has been the first one bit but other bits may be used as the identification bit as long as it is determined beforehand where the identification bit is present. Even if part of the bit sequence in a node is allocated to the identification bit, the remaining bits can specify a file location and thus there is no problem.

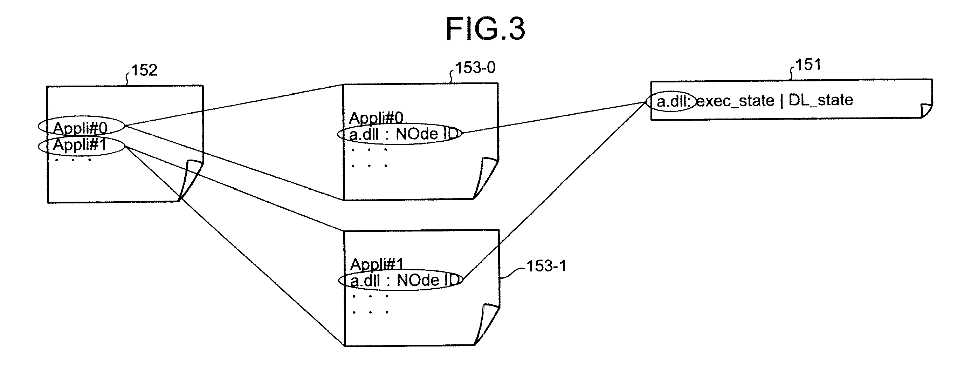

FIG. 3 is a diagram explaining the relationship among the process table 152, the link table 153, and status table 151. The process table 152 manages running process. The link table 153 manages a node for a file that is linked with a process in the process table 152. Different link tables 153 (153-0, 153-1) are present for different processes. Node of libraries managed by the link tables 153-0, 153-1 varies according to the timing of booting a process and of the completion of download.

The status table 151 is prepared for each library that is to be updated. The status table 151 is a table that is used to check whether the downloading of a library has been completed and based on the nodes in the link table 153, whether there is a process that still uses an older version of library even after the downloading is completed. The hypervisor 131 refers to the status table 151 and instructs the switching of files.

For example, assume that a new version of file has already been downloaded and an old version of file is being executed by the application program 136 (Appli#0). If the application program 136 (Appli#1) is activated, the hypervisor 131 instructs the calling of the new version of file. Otherwise, the hypervisor 131 instructs the calling of the old version of file.

### (Sequence for update mode)

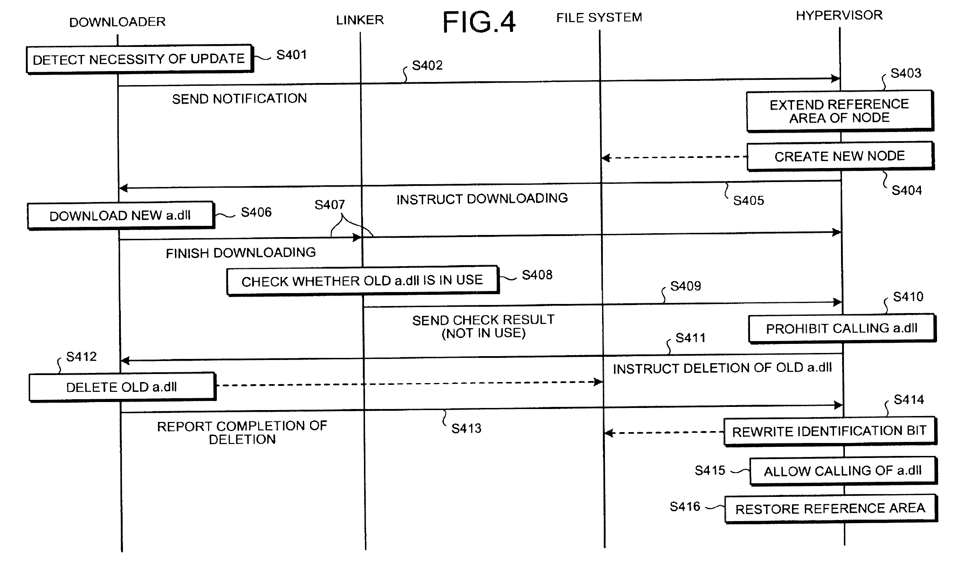

With reference to FIGs. 4-6, the sequence for the update mode is explained.

FIG. 4 is a diagram (Part 1) depicting the sequence of the update mode. In FIG. 4, a library (old a.dll) is not being used. When the downloader 135 detects the necessity of the update of a.dll (step S401), the downloader 135 sends notification to the hypervisor 131 (step S402). The hypervisor 131 receives the notification, moves from the normal mode to the update mode, and extends the reference area of a node as explained in phase (B) in FIG. 2 (step S403).

The hypervisor 131 creates the old node N1 as explained in phase (B) in FIG. 2 (step S404), and sets the old node N1 in the file system 133. The hypervisor 131 instructs the downloader 135 to start downloading (step S405).

When the downloader 135 is notified with the starting of the downloading, the downloader 135 downloads a new a.dll from the server 106 and stores the new a.dll in the storage area indicated by the new node N2 (step S406). The downloader 135 notifies the hypervisor 131 and the linker 134 of the completion of the downloading (step S407).

When the linker 134 receives the completion of the downloading, the linker 134 refers to the link table 153 and checks whether the old a.dll is in use (step S408). Since a library that is called but being executed is registered in the link table 153, it is known by the reference to the link table 153 whether the old a.dll is in use. According to the example in FIG. 3, the old a.dll is not in use and thus the linker 134 notifies the hypervisor 131 of a check result (not in use) (step S409).

When receiving the check result (not in use) from the linker 134, the hypervisor 131 sets the prohibition of calling a.dll (step S410). For example, the hypervisor 131 temporarily prohibits the OS 132 from activating the application program 136.

For example, a scheduler of the OS 132 is only allowed to queue the application program 136 and is prohibited from dispatching the application program 136. At this stage, since both old a.dll and new a.dll are present and the old a.dll that is to be deleted is called if the calling is allowed, the calling is prohibited.

After setting the calling prohibition, the hypervisor 131 instructs the deletion of the old a.dll to the downloader 135 (step S411). The deletion instruction includes the old node N1 for the old a.dll. When receiving the instruction of the deletion of the old a.dll from the hypervisor 131, the downloader 135 accesses the file system 133 based on the old node N1 and deletes the old a.dll and the old node N1 from the memory 103 (step S412). The downloader 135 notifies the hypervisor 131 of the completion of deletion (step S413).

When receiving the notification of the completion of deletion, the hypervisor 131 rewrites the identification bit of the new node N2 from "1" to "0" as explained in phase (D) in FIG. 2 (step S414). The hypervisor 131 releases the prohibition of the calling of a.dll (step S415). For example, the hypervisor 131 allows the dispatch of the application program 136 that has been put in a queue by the scheduler of the OS 132. In this way, a new file a.dll can be called.

The reference area of the new node N2 is brought back (mask setting) to the former state (before the extension at S403) (step S416) and the mode changes from the update mode to the normal mode.

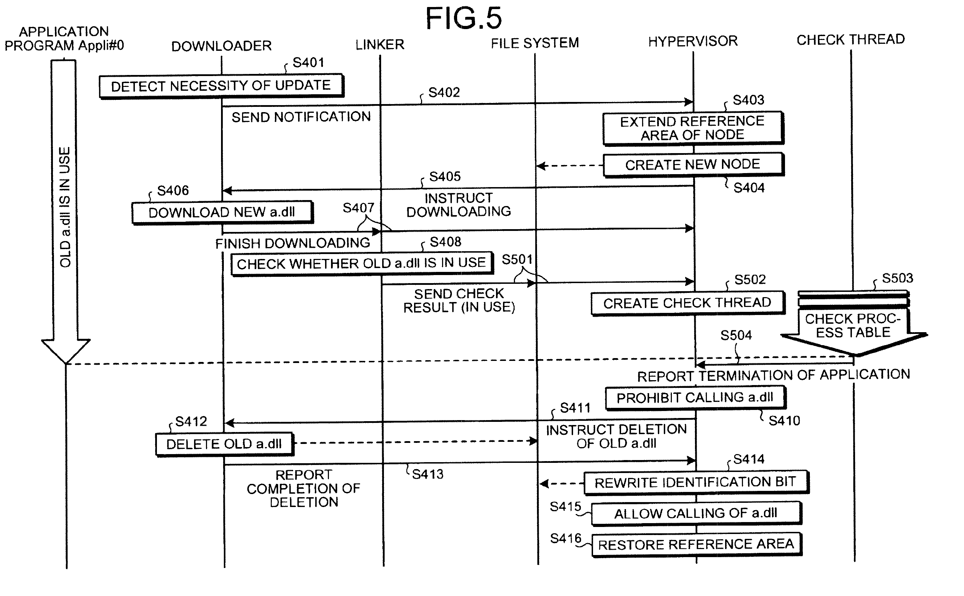

FIG. 5 is a diagram (Part 2) depicting the sequence of the update mode. In FIG. 5, a library (old a.dll) that is to be updated is being used by the application program 136 (Appli#0). Processes identical to those depicted in FIG. 4 are given identical step numbers, and an explanation thereof is omitted.

At step S408, the linker 134 checks whether the old a.dll is in use. Since the old a.dll has been registered in the link table 153, the linker 134 sends the check result (in use) to the hypervisor 141 and the file system 138 (step S501).

When receiving the check result (in use) from the linker 134, the hypervisor 131 creates a check thread (step S502). Since the running process has been registered in the process table 152, the check thread refers to the process table 152 and see whether the application program 136 (Appli#0) that is using the old a.dll stops (step S503).

When detecting the end of the application program 136 (Appli#0), the check thread sends a notification to the hypervisor 131 (step S504). When receiving the notification, the hypervisor 131 sets the prohibition of the calling of a.dll (step S410).

As explained above, even the mode moves to the update mode while the old a.dll is used, the update of libraries can be performed without suspending the OS 132 or the application program 136 (Appli#0).

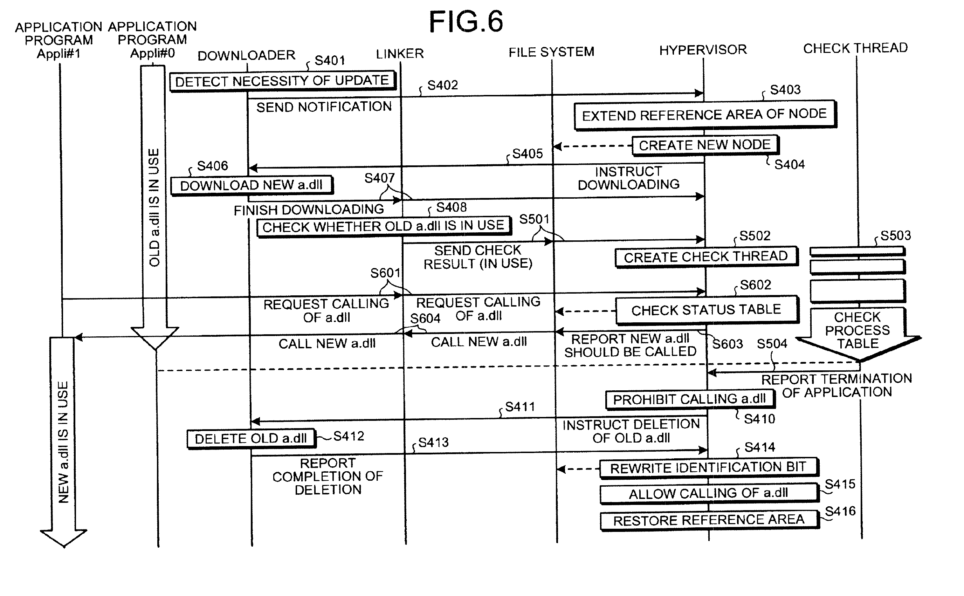

FIG. 6 is a diagram (Part 3) depicting the sequence of the update mode. FIG. 6 depicts the sequence in which a library to be updated (old a.dll) and an updated library (new a.dll) are present. Processes identical to those depicted in FIGs. 4 and 5 are given identical step numbers, and an explanation thereof is omitted.

At step S503, if an application program 136 (Appli#1) is activated and calls an a.dll file while the check thread is checking the process table 152 (step S601), the hypervisor 131 checks the status table 151 (step S602).
The hypervisor 131 knows, by referring to the status table 151, whether the old a.dll is being executed and whether a new a.dll has already been downloaded.

In this case, the old a.dll is in use and the new a.dll has already been downloaded, the hypervisor 131 notifies the file system 133 that it is the new a.dll that is to be called (step S603). The new a.dll is called from the file system 133 (step S604). In this way, even if both the old a.dll and the new a.dll are present, the update process is conducted without stopping the OS 132 or the application program 136.

### (Process of library update)

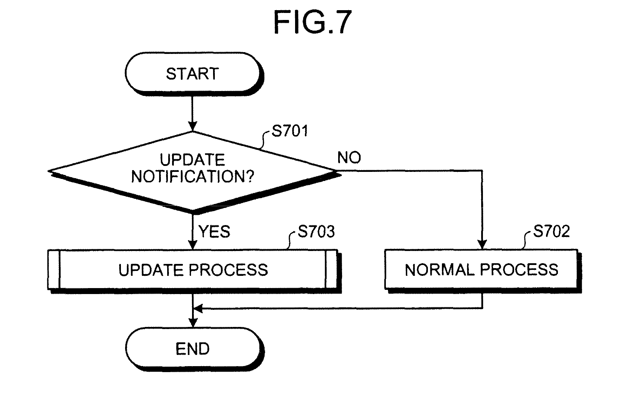

With reference to FIGs. 7 to 10, a process of the library update according to embodiments is explained.

FIG. 7 is a flowchart depicting a library update process. The hypervisor 131 waits for a notification of update from the downloader 135 (step S701). If there is no notification (step S701: NO), the hypervisor 131 works normally in the normal mode (step S702). If the notification is received (step S701: YES), the hypervisor 131 execute an update process in the update mode (step S703).

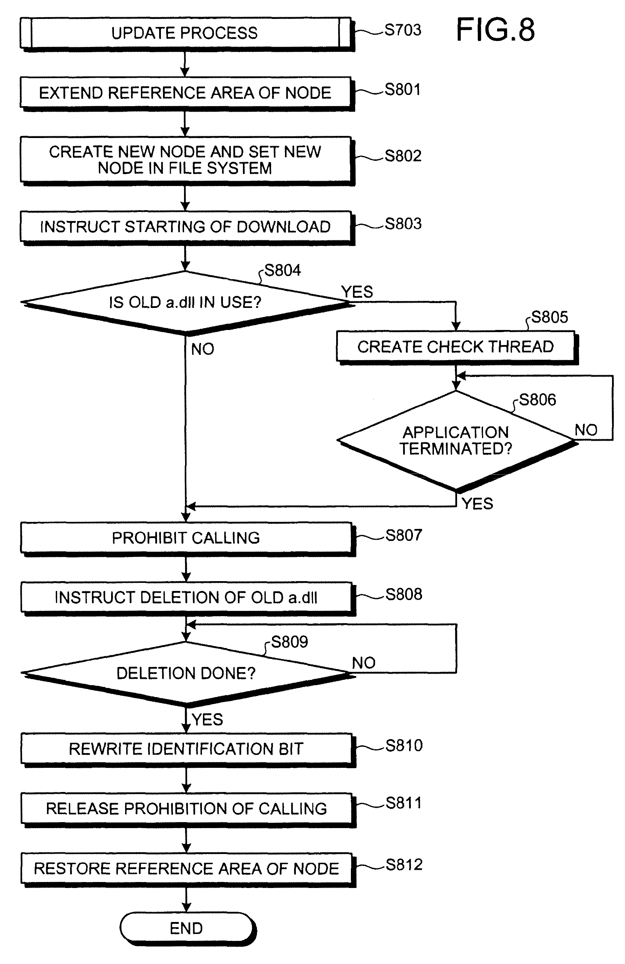

FIG. 8 is a flowchart depicting a detailed process of the update process in FIG. 7. The hypervisor 131 extends the reference area of a node (step S801). The hypervisor 131 creates a new node N2 for a new a.dll and sets the new node N2 in the file system 133 (step S802). The hypervisor 131 notifies the downloader 135 of the start of the download (step S803) and the new a.dll is stored in the storage area indicated by the old node N1.

The hypervisor 131 determines whether the old a.dll is in use (step S804). If the old a.dll is in use, (step S804: YES), the hypervisor 131 creates the check thread (step S805) and monitors if the application program 136 using the old a.dll terminates (step S806: NO). If the application program 136 using the old a.dll terminates (step S806: YES), the control goes to step S807.

If the old a.dll is not in use at step S804 (step S804: NO), the hypervisor 131 sets the prohibition of calling a library (step S807) and instructs the downloader 135 to delete the old a.dll (step S808). The hypervisor 131 waits for a notification from the downloader 135 that the deletion has been done (step S809: NO).

When the notification of deletion is received (step S809: YES), the hypervisor 131 rewrite the identification bit of the new node N2 (step S810). The hypervisor 131 releases the prohibition of calling a library (step S811) and sets a mask for the node, returning to the normal mode (step S812).

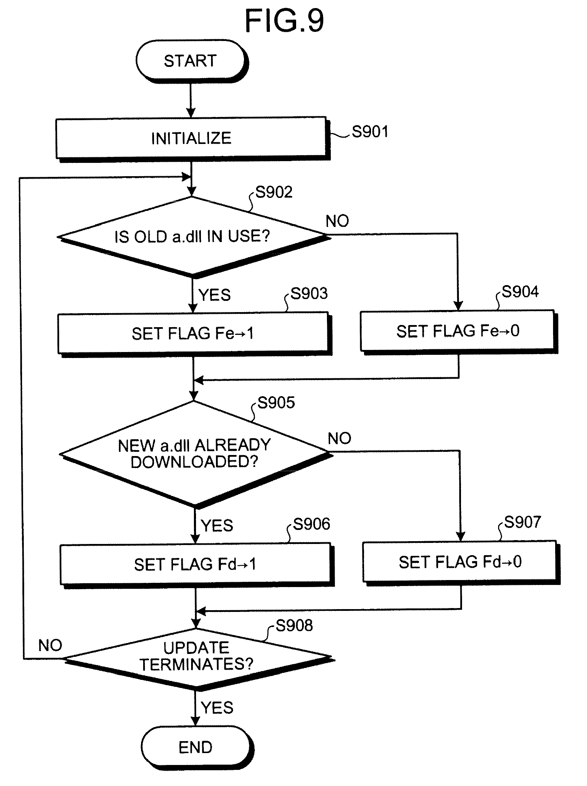

FIG. 9 is a flowchart depicting the update of the status table 151 by the hypervisor 131. The hypervisor 131 initializes the status table 151 (step S901). The hypervisor 131 checks whether the old a.dll is in use (step S902). If the old a.dll is in use (step S902: YES), a usage status flag Fₑ is set Fₑ=1 (in use) (step S903) and the control goes to step S905. If the old a.dll is not in use (step S902: NO), the hypervisor 131 sets the flag Fₑ to Fₑ=0 (not in use) (step S904) and the control goes to step S905.

At step S905, the hypervisor 131 determines whether the new a.dll has already been downloaded (step S905). If the new a.dll has already been downloaded (step S905: YES), the hypervisor 131 sets a download flag F_{d} to F_{d}=1 (downloaded) (step S906) and the control goes to step S908.

At step S905, if the new a.dll has not yet been downloaded (step S905: NO), the hypervisor 131 sets the download flag to F_{d}=0 (not downloaded) (step S907) and the control goes to step S908. At step S908, the hypervisor 131 determines whether the update mode is over (step S908). If the update mode is not over yet (step S908: NO), the control returns to step S902. If the update mode is over (step S908: YES), the update process for the status table 151 ends.

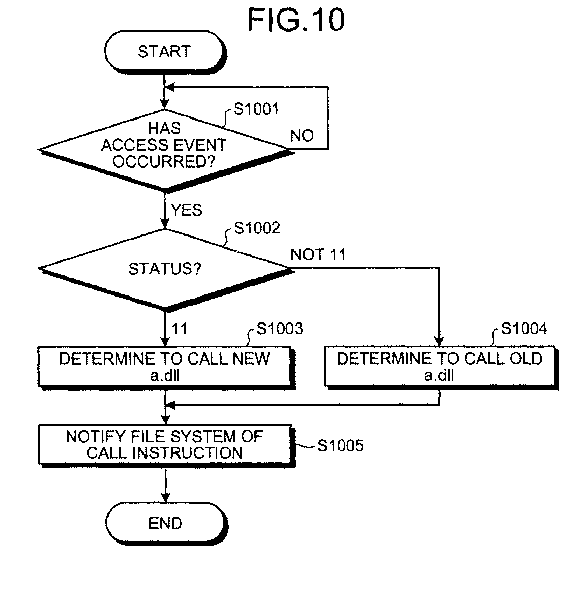

FIG. 10 is a flowchart depicting a read-out process of a library by the hypervisor 131. The hypervisor 131 waits for an access event (call request) from the application program 136 (step S1001: NO). If access event occurs (step S1001: YES), the hypervisor 131 checks the status of the status table 151 (step S1002). If the status reads "11" (step S1002: 11), namely if the old a.dll is in use and a new a.dll has already been downloaded, the hypervisor 131 determines to call the new a.dll (step S1003) and the control goes to step S1005.

If the status is not "11" (step S1002: other than 11), the hypervisor 131 determines to call the old a.dll (step S1004), and the control goes to step S1005. At step S1005, the hypervisor 131 notifies the file system 133 of the instruction of calling (step S1005). As explained above, the file system 133 transfers a called library to the application program 136 that requested the access event. In this way, the application can use the library.

As explained above, according to the embodiments, the CPU 101 downloads a file of a new version (new a.dll) concerning a library a.dll and deletes a file of an old version (old a.dll) concerning the library a.dll. The hypervisor 131 first have the CPU 101 notice the presence of the new version file (new a.dll). When the presence of the new version file is noticed, the hypervisor 131 creates, in addition to the first node (old node N1) that indicates a storage area for the old version file (old a.dll), the second node (new node N2) that indicates a storage area different from that indicated by the first node.

When a new version file (new a.dll) is downloaded to the storage area indicated by the second node (new node N2), the hypervisor 131 determines whether the old version file (old a.dll) is in use. If the old version file is not in use, the hypervisor 131 instructs the deletion of the old version file (old a.dll).

In this way, after the presence of the new version file (new a.dll) is detected (the update mode), the new version file (new a.dll) is stored in the storage area indicated by the second node (new node N2). Thus, the old version file (old a.dll) is not overwritten. Therefore, even if the application program 136 using the old version file (old a.dll) is running at the update mode, the update process proceeds without the OS 132 or the application program 136 suspended.

Further, since the deletion of the old version file (old a.dll) and the old node N1 is notified when the old version file (old a.dll) is not used, the deletion does not occur while the old version file (old a.dll) is in use. Therefore, even if the application program 136 using the old version file (old a.dll) is running in the update mode or even if the old version file (old a.dll) is being deleted, the update process proceeds without the OS 132 or the application program 136 suspended.

When the old version file (old a.dll) is in use, the hypervisor 131 determines whether the process using the old version file (old a.dll) has ended. If the process has ended, the hypervisor 131 instructs the deletion of the old version file (old a.dll) and the first node (old node N1).

As explained above, by monitoring a process calling an old version file (old a.dll), it is confirmed whether the old version file (old a.dll) is not used. Namely, since the old version file (old a.dll) is not called once the process ends, the update process proceeds without the OS 132 or the application program 136 being suspended even after the old version file (old a.dll) is deleted.

When the calling of a library a.dll is requested while the old version file (old a.dll) is in use and the new version file (new a.dll) has already been downloaded, the hypervisor 131 determines to call the new version file (new a.dll).

The old version file (old a.dll) is removed from the candidates for being called and thus the delay of the deletion of the old version file (old a.dll) is prevented. Further, even if the old version file (old a.dll) is crossed out from the candidates for being called, a process that calls the library a.dll can call the latest version since the new version file (new a.dll) has already been downloaded. Thus this scheme is efficient. In this way, the update process proceeds without the OS 132 or the application program 136 being suspended.

If the old version file (old a.dll) is not in use, before the instruction of the deletion of the old version file (old a.dll) and the first node (old node N1), the hypervisor 131 set the ban of calling the library a.dll. After the old version file (old a.dll) and the first node (old node N1) are deleted, the hypervisor 131 releases the ban.

As above, the calling of the old and new version files is prohibited before the deletion. The calling of the new version file is prohibited after the deletion. When the ban of calling is released, the new version file (new a.dll) can be used. Therefore, the update process proceeds without the OS 132 or the application program 136 being suspended.

The hypervisor 131 switches a reference area of the node that indicates the storage area of each library in the OS 132 from part of the node (remaining bits) to the entire area of the node. When the old version file (old a.dll) and the first node (old node N1) are deleted, the reference area of the node is switched from the entire area of the node to part of the node (remaining bits).

The hypervisor 131 assigns the same numerals as the part (remaining bits) of the first node (old node N1) to the part of the second node (new node N2). The hypervisor 131 assigns a value different from one in the area (identification bit) other than the part (remaining bits) of the first node (old node N1) to the area (identification bit) other than the part (remaining bits) of the second node (new node N2).

In other words, an identification bit is assigned to part of a node to distinguish between the update mode and the normal mode, and the remaining bits are identical between the old and new libraries. The reference area is the entire bits including the identification bit during the update mode and is the remaining bits except the identification bit in the normal mode. The reference area can be switched.

After the update process is complete, the reference area of the node returns to the state before the update mode, i.e., the bits that remain excluding the identification bit. In this way, the identification bit is masked. When a library a.dll is called, the application program 136 calls the library based on the remaining bits.

Since the remaining bits in the old node N1 and those in the new node N2 are identical, the application program 136 accesses the storage area specified by the remaining bits and calls the new version file (new a.dll) independent of before or after the updating. Therefore, the application program 136 can be executed without affecting the normal mode.

As set forth above, the update program, the update apparatus, and the update method are applicable to a mobile terminal such as a mobile phone that conducts an update process via a network.

### EXPLANATIONS OF LETTERS OR NUMERALS

- 100: Update apparatus
- 131: Hypervisor
- 133: File system
- 134: Linker
- 135: Downloader
- 136: Application program
- 141: Kernel
- 142: Libraries
- 151: Status table
- 152: Process table
- 153: Link table
- N1: Old node
- N2: New node

## Claims

1. An update method for a processor that downloads a new version of a file concerning a library in a set of libraries in an operating system and deletes an old version of the file concerning the library, the processor performing:
detecting presence of the new version of the file;
creating, when the new version of the file is detected, a second node that specifies a second storage area that is a different area from a first storage area for the old version of the file that is specified by a first node;
checking, when the new version of the file is downloaded to the second storage area specified by the second node created at the creating, whether the old version of the file is in use; and
giving notification of an instruction to delete the first node and the old version of the file, when the old version of the file is confirmed at the checking to not be in use.

2. The update method according to claim 1, wherein
the checking, includes checking, when the old version of the file is confirmed to be in use, whether a process using the old version of the file terminates, and
the giving notification includes giving notification of the instruction to delete the first node and the old version of the file when the process has been confirmed at the checking to have terminated.

3. The update method according to claim 1 or 2, wherein the processor further performs
deciding to call the new version of the file when the library requests calling of the file, the old version of the file is in use, and the new version of the file has already been downloaded, wherein
the giving notification includes giving to the process, notification of the new version of the file.

4. The update method according to claim 1 or 2, wherein the processor further performs
prohibiting, when the old version of the file is confirmed to not be in use, calling of the library before deletion of the first node and the old version of the file, and
releasing, when the first node and the old version of the file have been deleted, prohibition of the calling.

5. The update method according to claim 1 or 2, wherein the processor further performs:
switching, when the new version of the file is detected at the detecting, a reference area of one node from part of the node to the entire area of the node where the reference area specifies the storage area of a library;
switching, when the first node and the old version of the file have been deleted, the reference area from the entire area of the node to part of the node, wherein
the creating includes creating the second node by copying a value expressed by the part of the first node to the part of the second node and giving a value to the second node less the part different from a value of the first node less the part.

6. The update method according to claim 5, wherein the processor further performs
rewriting, when the first node and the old version of the file have been deleted, the value of the second node less the part identical to the value of the first node less the part.

7. An update apparatus that downloads a new version of a file concerning a library in a set of libraries in an operating system and deletes an old version of the file concerning the library, the apparatus comprising:
a detecting unit configured to detect presence of the new version of the file;
a creating unit configured to create, when the new version of the file is detected, a second node that specifies a second storage area that is a different area from a first storage area for the old version of the file that is specified by a first node;
a checking unit configured to check, when the new version of the file is downloaded to the second storage area specified by the second node, whether the old version of the file is in use; and
a notifying unit configured to give notification of an instruction to delete the first node and the old version of the file, when the old version of the file is confirmed to not be in use.

8. An update program for a processor that downloads a new version of a file concerning a library in a set of libraries in an operating system and deletes an old version of the file concerning the library, the update program causing the processor to execute:
detecting presence of the new version of the file;
creating, when the new version of the file is detected, a second node that specifies a second storage area that is a different area from a first storage area for the old version of the file that is specified by a first node;
checking, when the new version of the file is downloaded to the second storage area specified by the second node created at the creating, whether the old version of the file is in use; and
giving notification of an instruction to delete the first node and the old version of the file, when the old version of the file is confirmed at the checking to not be in use.
